(19) Europäisches Patentamt
European Patent Office
Office européen des brevets

(11) **EP 0 882 956 B1**

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(51) Int Cl.:
*G01F 23/284* *(2006.01)*

(21) Anmeldenummer: **98109741.3**

(22) Anmeldetag: **28.05.1998**

(54) **Verfahren zur Messung des Füllstands eines Füllguts in einem Behälter nach dem Radarprinzip**

Method for material level measurement in a container according to the radar principle

Procédé de mesure du niveau d'un matériau dans un réservoir suivant le principe radar

(84) Benannte Vertragsstaaten:
**DE FR GB IT**

(30) Priorität: **06.06.1997 DE 19723978**

(43) Veröffentlichungstag der Anmeldung:
**09.12.1998 Patentblatt 1998/50**

(73) Patentinhaber: **Endress + Hauser GmbH + Co. KG**
**79689 Maulburg (DE)**

(72) Erfinder:
• **Burger, Stefan**
**79108 Freiburg (DE)**

• **Fitsch, Carsten**
**79713 Bad Säckingen (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**DE-A- 2 408 772        DE-A- 4 407 369**

EP 0 882 956 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Messung des Füllstands eines Füllguts in einem Behälter nach dem Radarprinzip, bei welchem mittels der oberhalb der höchsten vorkommenden Füllhöhe angeordneten Antenne eines Entfernungsmeßgeräts Mikrowellen nach unten abgestrahlt und reflektierte Mikrowellen empfangen werden, das die Amplitudenwerte der empfangenen Mikrowellen als Funktion der Laufzeit bzw. der der Laufzeit entsprechenden Distanz darstellende Echoprofil aufgezeichnet wird, zur Bestimmung des Echohöckers im Echoprofil, der von den an der Füllgutoberfläche reflektierten Echowellen stammt, ein Maximum des Echoprofils ermittelt wird und der Abstand der Füllgutoberfläche von der Antenne aus dem Spitzenwert dieses Echohöckers gewonnen wird.

Bei diesem Verfahren wird davon ausgegangen, daß das Maximum des Echoprofils dem Spitzenwert des Echohöckers entspricht, der von den an der Füllgutoberfläche reflektierten Echowellen stammt, so daß der Abstand der Füllgutoberfläche von der Antenne aus dem diesem Spitzenwert zugeordneten Distanzwert ermittelt werden kann. Es kann jedoch vorkommen, daß diese Voraussetzung nicht erfüllt ist, wenn an der Antenne ein Doppelecho eintrifft, das dadurch verursacht wird, daß die Mikrowellen nicht nur an der Füllgutoberfläche reflektiert werden, sondern auch an einer in geringem Abstand unter der Füllgutoberfläche liegenden Grenzfläche. Eine solche Grenzfläche bildet beispielsweise der Behälterboden bei sehr niedriger Füllhöhe im Behälter. Wenn das Füllgut eine kleine Dielektrizitätskonstante hat, wird an der Füllgutoberfläche nur ein verhältnismäßig geringer Anteil der auftreffenden Mikrowellen reflektiert, während der Rest der auftreffenden Mikrowellen durch das Füllgut läuft und am Behälterboden reflektiert wird. Bei niedriger Füllhöhe und kleiner Dielektrizitätskonstante werden die durch das Füllgut laufenden Mikrowellen nur schwach gedämpft; es kann daher der Fall eintreten, daß die an der Füllgutoberfläche reflektierte Echowelle eine kleinere Amplitude hat als die am Behälterboden reflektierte Echowelle. Die beiden Echowellen treffen an der Antenne ein, wobei die am Behälterboden reflektierte Echowelle gegenüber der an der Füllgutoberfläche reflektierten Echowelle um eine Zeitspanne verzögert ist, die dem Abstand zwischen der Füllgutoberfläche und dem Behälterboden entspricht. Wenn dieser Abstand entsprechend gering ist, überlappen sich die von den beiden Echowellen stammenden Echohöcker im Echoprofil unter Bildung eines Doppelhöckers. Die Bestimmung des Füllstands auf Grund des Maximums der Echofunktion kann dann zu einem Meßfehler führen, wenn die am Behälterboden reflektierte Echowelle eine größere Amplitude hat als die an der Füllgutoberfläche reflektierte Echowelle, weil dieses Maximum nicht bei dem Distanzwert des Spitzenwertes des Echohöckers liegt, der von der an der Füllgutoberfläche reflektierten Echowelle stammt.

Die gleiche Erscheinung tritt auf, wenn die reflektierende Grenzfläche nicht der Behälterboden ist, sondern eine Grenzfläche zwischen zwei Stoffen mit sehr unterschiedlichen Dielektrizitätskonstanten, die sich in geringem Abstand unter der Füllgutoberfläche befindet. Dies gilt beispielsweise für eine Ölschicht, die auf Wasser schwimmt.

Aufgabe der Erfindung ist die Schaffung eines Verfahrens der eingangs angegebenen Art, das im Falle eines Doppelechos, das zum Auftreten eines Doppelhöckers aus zwei sich überlappenden Echohöckern im Echoprofil führt, die Ermittlung des der Füllgutoberfläche zugeordneten Distanzwertes ermöglicht.

Die Aufgabe wird durch den Kennzeichnenden Teil von Anspruch 1 gelöst.

Weitere Merkmale und Vorteile der Erfindung ergeben sich aus der folgenden Beschreibung eines Ausführungsbeispiels anhand der Zeichnung. In der Zeichnung zeigen:

Fig. 1     das Prinzipschema einer Anordnung zur Messung des Füllstands eines Füllguts in einem Behälter nach dem Radarprinzip, bei der das erfindungsgemäße Verfahren anwendbar ist, und

Fig. 2     bis 5 Diagramme zur Erläuterung der Funktionsweise der Anordnung von Fig. 1 bei Anwendung des erfindungsgemäßen Verfahrens.

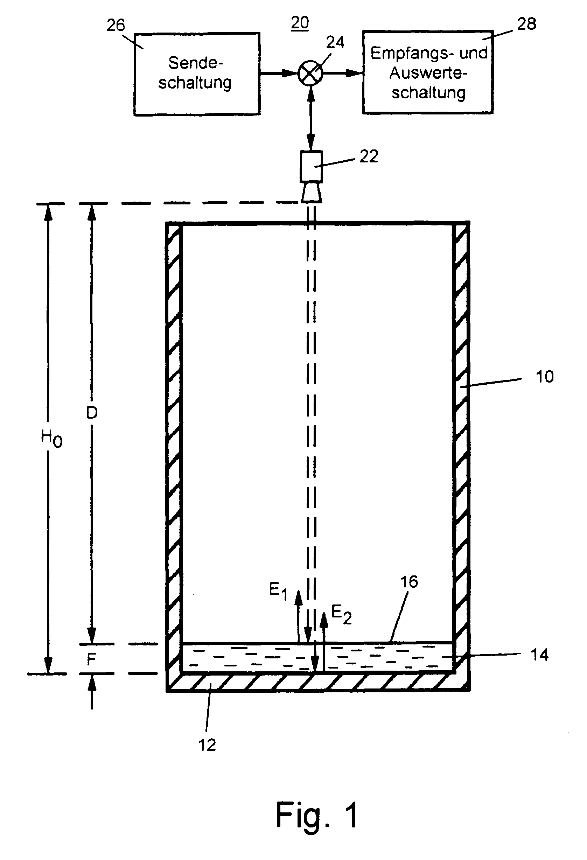

Fig. 1 der Zeichnung zeigt einen Behälter 10 mit einem Behälterboden 12, der bis zu einer Höhe F mit einem Füllgut 14 gefüllt ist, so daß die Füllgutoberfläche 16 im Abstand F über dem Behälterboden 12 liegt. Als Füllstand im Behälter 10 wird entweder die Füllhöhe F oder das der Füllhöhe F entsprechende Volumen des Füllguts 14 bezeichnet. Bei einem Behälter, der über seine ganze Höhe einen gleichbleibenden Querschnitt hat, ist das Füllgutvolumen der Füllhöhe F proportional; bei Behältern, bei denen diese Voraussetzung nicht erfüllt ist, läßt sich der Zusammenhang zwischen der Füllhöhe F und dem Füllgutvolumen rechnerisch oder experimentell bestimmen und durch eine Kurve oder Tabelle darstellen. In jedem Fall genügt zur Bestimmung des Füllstands im Behälter die Messung der Füllhöhe F.

Bei dem in Fig. 1 dargestellten Behälter 10 erfolgt die Messung der Füllhöhe F durch ein mit Mikrowellen nach dem Pulsradarprinzip arbeitendes Entfernungsmeßgerät 20. Das Entfernungsmeßgerät 20 enthält eine Sende-Empfangs-Antenne 22, die über eine Sende-Empfangs-Weiche 24 mit einer Sendeschaltung 26 und mit einer Empfangs- und Auswerteschaltung 28 verbunden ist. Die Sendeschaltung 26 erzeugt in periodischen Zeitabständen Ultrahochfrequenzimpulse, die der Antenne 22 über die Sende-Empfangs-Weiche 24 zugeführt werden. Die Antenne 22 ist oberhalb der höchsten Füllhöhe, die im Behälter 10 vorkommen kann, so angeordnet, daß sie die von der Sendeschaltung 26 kommenden Ultrahochfrequenzimpulse in Form von Mikrowellen senkrecht nach unten abstrahlt und von unten kommende Mikrowellen empfängt. Die von der Antenne 22 empfangenen Mikrowellen, zu denen insbesondere die an der Oberfläche 16 des Füllguts 14 reflektierten Echowellen gehören, werden über die Sende-Empfangs-Weiche 24 der Empfangs- und Auswerteschaltung 28 zugeführt. In der Empfangs- und Auswerteschaltung 28 werden die von der Antenne 22 empfangenen Mikrowellen ausgewertet, um die an der Füllgutoberfläche 16 reflektierten Echowellen zu ermitteln und deren Laufzeit zu messen. Aus der gemessenen Laufzeit zwischen dem Zeitpunkt der Aussendung eines Mikrowellenimpulses durch die Antenne 22 und dem Eintreffen des an der Füllgutoberfläche 16 reflektierten Echoimpulses an der Antenne 22 kann aufgrund der bekannten Ausbreitungsgeschwindigkeit der Mikrowellen die Distanz D zwischen der Antenne 22 und der Füllgutoberfläche 16 berechnet werden. Die Füllhöhe F ergibt sich dann aus der Differenz zwischen der Einbauhöhe $H_0$ der Antenne 22 über dem Behälterboden 12 und der gemessenen Entfernung:

$$F = H_0 - D.$$

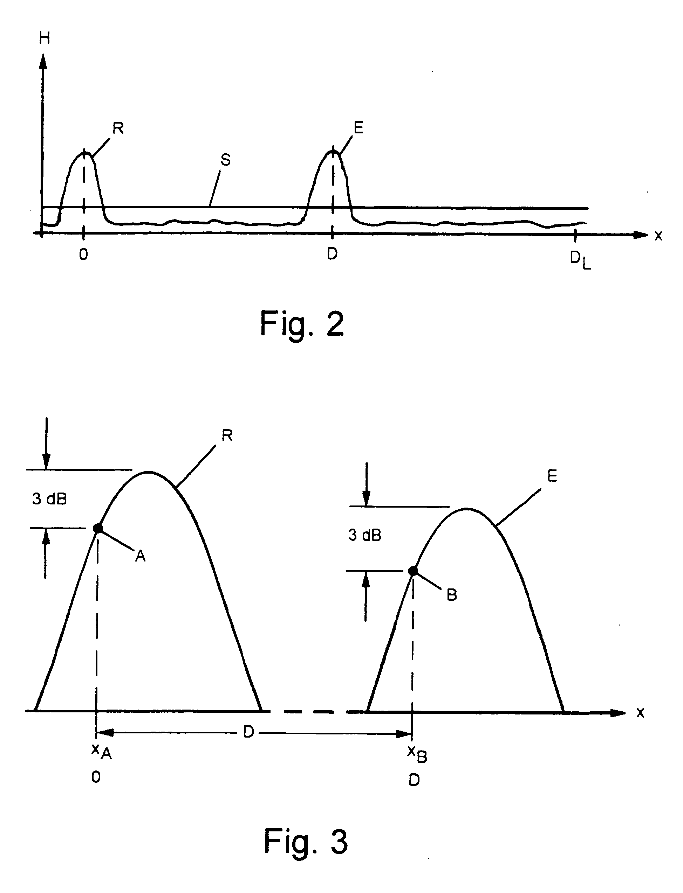

Zur Auswertung der empfangenen Mikrowellen in der Empfangs und Auswerteschaltung 28 wird üblicherweise das Echoprofil aufgezeichnet, das die Amplitudenwerte der empfangenen Mikrowellen als Funktion der Laufzeit oder, was auf das gleiche hinausläuft, der von den Mikrowellen zurückgelegten Strecke darstellt. Bei einem Pulsradar ist das Echoprofil durch die Hüllkurve der empfangenen Mikrowellen gegeben. Fig. 2 zeigt als Beispiel das Diagramm der Hüllkurve H als Funktion der von den Mikrowellen doppelt (Hinweg und Rückweg) zurückgelegten Strecke x, wie sie im Normalfall bei der Messung des Füllstands in einem Behälter erhalten wird. Die Hüllkurve H hat fast in dem gesamten Bereich bis zu der maximalen Distanz $D_L$, die bei leerem Behälter gemessen wird und daher "Leerdistanz" genannt wird, einen verhältnismäßig niedrigen Pegel, der dem Rauschpegel sowie überlagerten Störungen entspricht; sie weist jedoch zwei wesentlich höhere Höcker R und E auf. Der Höcker R stammt von dem Sendeimpuls und entsteht dadurch, daß die Sende-Empfangs-Weiche 24 zwar den überwiegenden Teil jedes Sendeimpulses zur Antenne 22 überträgt, einen kleinen Anteil aber zur Empfangs- und Auswerteschaltung 28 durchläßt, wo er zusammen mit den von der Antenne 22 empfangenen Mikrowellen in das Echoprofil aufgenommen wird und als Referenzhöcker R verwendet werden kann. Der Höcker E stammt von den an der Füllgutoberfläche 16 reflektierten Echowellen und bildet den Echohöcker, der zur Ermittlung der Distanz D zwischen der Antenne 22 und der Füllgutoberfläche 16 ausgewertet wird. Der Rausch- und Störsignalanteil wird üblicherweise durch ein Schwellenprofil S unterdrückt, so daß nur die das Schwellenprofil S übersteigenden Amplitudenwerte der Hüllkurve der Auswertung unterworfen werden.

Die Ermittlung der Distanz D erfolgt im einfachsten Fall dadurch, daß ein Maximum der Hüllkurve H in dem sich an den Referenzimpuls R anschließenden Bereich gesucht wird. Dieses Maximum kann dem größten Amplitudenwert der Hüllkurve entsprechen. Nach einem anderen Verfahren wird zusätzlich zu dem Echo mit der größten Amplitude, also dem Maximum der Hüllkurve, auch das zeitlich zuerst eintreffende Echo bestimmt. Wenn die Amplitude dieses ersten Echos größer als die um einen einstellbaren Faktor verringerte maximale Amplitude ist, wird das erste Echo als Nutzecho ausgewählt. Die Bedingung kann beispielsweise lauten, daß die Amplitude des ersten Echos größer als die um 20 dB verringerte maximale Amplitude sein muß. In jedem Fall wird davon ausgegangen, daß das ermittelte Maximum dem Spitzenwert des Echohöckers E entspricht, der von den an der Füllgutoberfläche reflektierten Mikrowellen stammt. Dann wird auf der x-Achse der Abstand dieses Maximums von einem Referenzpunkt 0 bestimmt, der beispielsweise dem Ort des Spitzenwerts des Referenzhöckers R entspricht. Dieser Abstand entspricht der Distanz D zwischen der Antenne 22 und der Füllgutoberfläche 16.

Dieses einfachste Verfahren zur Bestimmung der Distanz D weist den Nachteil auf, daß der genaue Ort des Spitzenwerts des Echohöckers E nur mit verhältnismäßig geringer Genauigkeit bestimmt werden kann, weil sich die Amplitude des Echohöckers im Bereich des Spitzenwerts nur langsam ändert. Anhand des Diagramms von Fig. 3 wird ein anderes Verfahren zur Bestimmung der Distanz D erläutert, das eine höhere Genauigkeit ergibt. Zur Verdeutlichung sind in dem Diagramm von Fig. 3 nur die den Referenzhöcker R und den Echohöcker E enthaltenden Abschnitte der Hüllkurve H in größerem Maßstab dargestellt.

Bei diesem Verfahren wird im Referenzhöcker R der Punkt A auf der ansteigenden Flanke gesucht, dessen Amplitude um einen vorbestimmten Betrag, im dargestellten Beispiel um 3 dB unter dem Spitzenwert liegt, und es wird der Distanzwert $x_A$ dieses Punktes A auf der x-Achse ermittelt. Im Echohöcker E werden die Amplituden der zeitlich vor dem Spitzenwert liegenden Meßpunkte untersucht und der Distanzwert $x_B$ des Meßpunktes B ermittelt, dessen Amplitude um den gleichen vorbestimmten Betrag, im dargestellten Beispiel also wieder um 3 dB unter dem Spitzenwert liegt. Der Meßpunkt, dessen Amplitude um 3 dB unter dem Spitzenwert liegt, läßt sich gerade deshalb mit großer Genauigkeit ermitteln, weil sich die Amplitude des Echohöckers im Bereich des Spitzenwerts nur wenig ändert und daher diese Amplitude sehr genau bestimmt werden kann; und der Distanzwert dieses Meßpunktes läßt sich mit großer Genauigkeit bestimmen, weil der Meßpunkt auf einem steilen Bereich der Flanke liegt.

Die gesuchte Distanz D ergibt sich dann unmittelbar aus dem Abstand der Distanzwerte $x_A$ und $x_B$, denn dieser Abstand ist ebenso groß wie der Abstand zwischen den Spitzenwerten der beiden Höcker, aus den oben angegebenen Gründen aber mit größerer Genauigkeit bestimmt. Wenn dem Distanzwert $x_A$ der Wert 0 zugeordnet wird, entspricht die gesuchte Distanz D dem Distanzwert $x_B$.

Das Diagramm von Fig. 2, in dem der Echohöcker E etwa in der Mitte zwischen dem Distanzwert 0 und der Leerdistanz $D_L$ liegt, entspricht dem Fall, daß der Behälter 10 etwa zur Hälfte gefüllt ist. Die Bestimmung der Distanz D ist in diesem Fall mit einem der zuvor anhand von Fig. 2 und 3 erläuterten Verfahren problemlos möglich.

Dagegen entsteht ein Problem in dem in Fig. 1 dargestellten Fall, daß die Füllhöhe F im Behälter 10 sehr gering ist, und zwar insbesondere dann, wenn das Füllgut eine niedrige Dielektrizitätskonstante hat. In diesem Fall wird an der Füllgutoberfläche 16 nur ein verhältnismäßig geringer Anteil der auftreffenden Mikrowellen als Echowelle $E_1$ reflektiert, während der Rest der auftreffenden Mikrowellen durch das Füllgut 14 läuft und am Boden 12 des Behälters 10 als Echowelle E2 reflektiert wird. Infolge der kleinen Füllhöhe F und der niedrigen Dielektrizitätskonstante des Füllguts werden die durch das Füllgut 14 laufenden Mikrowellen nur schwach gedämpft. Es kann daher der Fall eintreten, daß die Amplitude der an der Füllgutoberfläche 16 reflektierten Echowelle $E_1$ eine kleinere Amplitude hat als die am Behälterboden 12 reflektierte Echowelle $E_2$.

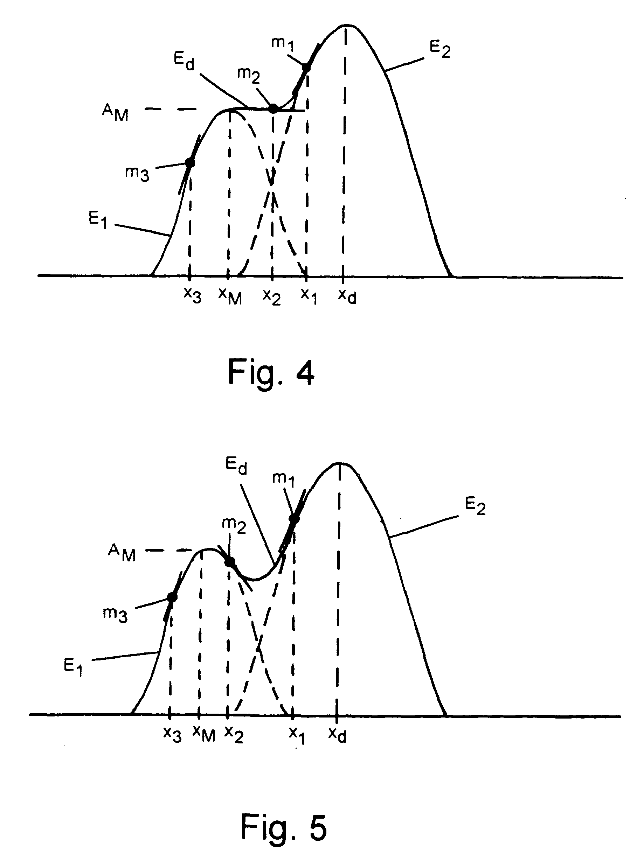

Die beiden Echowellen $E_1$ und $E_2$ treffen an der Antenne 22 ein, wobei die Echowelle $E_2$ gegenüber der Echowelle $E_1$ um eine Zeitspanne verzögert ist, die dem Abstand F zwischen der Füllgutoberfläche 16 und dem Behälterboden 12 entspricht. Wenn dieser Abstand F entsprechend gering ist, überlappen sich die von den Echowellen $E_1$ und $E_2$ stammenden Echohöcker in der Hüllkurve H, wie dies in den Diagrammen von Fig. 4 und Fig. 5 für den Fall dargestellt ist, daß die Echowelle $E_2$ eine größere Amplitude als die Echowelle $E_1$ hat. Die Amplituden der Echohöcker $E_1$ und $E_2$ addieren sich zu einem Doppelhöcker $E_d$. Das Diagramm von Fig. 5 entspricht einem etwas größeren Abstand F als das Diagramm von Fig. 4.

In diesem Fall kann ein Meßfehler auftreten, wenn die Signalauswertung nach einem der oben anhand von Fig. 2 und 3 beschriebenen Verfahren erfolgt, weil dann das Maximum der Hüllkurve H an der Stelle des Echohöckers $E_2$ liegt, der von der am Behälterboden 12 reflektierten Echowelle stammt. Somit wird der wahre Füllstand, der durch den Spitzenwert des Echohöckers $E_1$ gegeben ist, nicht erkannt und fälschlich angezeigt, daß der Behälter leer ist.

Dieser Fehler tritt übrigens nicht nur in dem Fall auf, daß die Füllgutoberfläche 16 in geringem Abstand über dem Behälterboden 12 liegt, sondern auch dann, wenn sich eine andere reflektierende Grenzfläche in geringem Abstand unter der Füllgutoberfläche befindet, vor allem wenn diese Grenzfläche zwei Stoffe mit sehr unterschiedlichen Dielektrizitätskonstanten voneinander trennt. Dies gilt beispielsweise für eine Ölschicht, die auf Wasser schwimmt.

Das nachfolgend beschriebene Verfahren zur Doppelecho-Auswertung macht es möglich, im Falle eines Doppelechos, das einen Doppelhöcker aus zwei sich überlappenden Echohöckern verursacht, die Position des Maximums des Echoprofils zu ermitteln, das der Reflexion der Mikrowellen an der Füllgutoberfläche 16 zuzuordnen ist, so daß der geschilderte Meßfehler vermieden wird. Dieses Verfahren wird anhand der Diagramme vom Fig. 4 und 5 erläutert.

Ausgehend von dem zunächst ermittelten Maximum der Hüllkurve H, das dem Spitzenwert des Doppelhöckers $E_d$ entspricht und bei dem Distanzwert $x_d$ liegt, werden die Amplituden der zeitlich vor diesem Maximum liegenden Meßpunkte ausgewertet, um die Steigung m der Hüllkurve H an diesen Meßpunkten zu bestimmen. Hieraus werden die folgenden drei Steigungen des Echoprofils und die zugehörigen Distanzwerte ermittelt:

a) das dem Maximum des Echoprofils zunächst liegende erste Maximum $m_1$ der Steigung des Echoprofils und der zugehörige Distanzwert $x_1$;

b) das dem ersten Maximum $m_1$ zunächst liegende Minimum $m_2$ der Steigung des Echoprofils und der zugehörige Distanzwert $x_2$;

c) das dem Minimum $m_2$ zunächst liegende zweite Maximum $m_3$ der Steigung des Echoprofils und der zugehörige Distanzwert $x_3$.

Im Diagramm von Fig. 4 liegt das Minimum $m_2$ an der Stelle, an der der Doppelhöcker $E_d$ in die Horizontale übergeht. Das Minimum $m_2$ entspricht somit der Steigung 0. Für die Bestimmung des Minimums $m_2$ ist jedoch zu beachten, daß darunter nicht der Absolutwert zu verstehen ist, sondern der algebraische Wert unter Berücksichtigung des Vorzeichens. Deshalb liegt im Diagramm von Fig. 5 das Minimum $m_2$ nicht bei der Steigung 0, sondern bei der größten negativen Steigung.

Nach der Ermittlung dieser drei Steigungen und der zugehörigen Distanzwerte erfolgt vorzugsweise eine Plausibilitätsprüfung, um festzustellen, ob die Anwendung der Doppelecho-Auswertung sinnvoll ist. Zu diesem Zweck wird der Quotient

$$Q = m_2 / m_1$$

aus dem Minimum $m_2$ und dem ersten Maximum $m_1$ der Steigung gebildet und mit einem Referenzwert verglichen. Der Referenzwert wird empirisch bestimmt; er kann beispielsweise in der Größenordnung von 0,8 liegen. Ist der Quotient kleiner als der Referenzwert, so wird ein Distanzwert $x_M$ gemäß folnder Gleichung berechnet:

$$x_M = x_2 - 0,5 \cdot (x_2 - x_3).$$

Der Distanzwert $x_M$ liegt also in der Mitte zwischen dem Distanzwert $x_3$ des zweiten Steigungsmaximums $m_3$ und dem Distanzwert $x_2$ des Steigungsminimums $m_2$. Ferner wird die zu diesem Distanzwert $x_M$ gehörige Amplitude AM des Echoprofils ermittelt. Die Amplitude AM wird als das für die Bestimmung der Distanz D der Füllgutoberfläche maßgebliche Maximum der Hüllkurve angesehen, das bei dem Distanzwert $x_M$ liegt. Mit diesen Werten erfolgt dann die Bestimmung der Distanz D vorzugsweise nach dem Verfahren, das anhand von Fig. 3 erläutert worden ist. Der Distanzwert $x_B$ ist in diesem Fall der Distanzwert des Meßpunktes, der auf der ansteigenden Flanke des Doppelhöckers um den vorbestimmten Betrag von beispielsweise 3 dB unter der Amplitude AM liegt, die nach dem Verfahren der Doppelecho-Auswertung ermittelt worden ist.

Wenn dagegen der Quotient Q größer als der Referenzwert ist, erfolgt die Bestimmung der Distanz D mit dem ursprünglich ermittelten Maximum der Hüllkurve. Wie im Falle des Steigungsminimums gilt auch hier die Regel, daß der algebraische Wert des Quotients Q zu verwenden ist; ein negativer Quotient Q ist also immer kleiner als der positive Referenzwert.

Desgleichen wird die Doppelecho-Auswertung abgebrochen, wenn der Doppelhöcker bei dem Distanzwert $x_3$ des zweiten Steigungsmaximums $m_3$ eine so geringe Amplitude hat, daß sie praktisch im Rauschen untergeht.

Die zuvor angegebenen Verfahrensschritte zur Doppelecho-Auswertung werden programmgesteuert durch eine in der Empfangs- und Auswerteschaltung 28 enthaltene Rechenschaltung durchgeführt. Vorzugsweise ist die Doppelecho-Auswertung abschaltbar, so daß der Anwender bestimmen kann, ob sie durchgeführt wird. Wenn sie eingeschaltet ist, wird sie bei jeder Bestimmung des Maximums der Echofunktion zumindest bis zur Plausibilitätsprüfung durchgeführt. Zur Vermeidung der hierfür benötigten Rechenzeit ist die Abschaltung zweckmäßig, wenn beispielsweise wegen der Bechaffenheit des Füllguts keine Doppelechos zu erwarten sind.

Bei dem zuvor beschriebenen Ausführungsbeispiel erfolgt die Füllstandsmessung nach dem Pulsradarprinzip. Die Erfindung ist jedoch nicht auf diesen Fall beschränkt, sondern für alle nach dem Radarprinzip arbeitenden Verfahren geeignet, bei denen ein Echoprofil erstellt werden kann. Dies gilt insbesondere auch für das FMCW-Radar (Frequenzmodulations-Dauerstrichradar). Bei dem FMCW-Verfahren wird eine kontinuierliche Mikrowelle ausgesendet, die periodisch linear frequenzmoduliert ist, beispielsweise nach einer Sägezahnfunktion. Die Frequenz jedes empfangenen Echosignals weist daher gegenüber der Augenblicksfrequenz, die das Sendesignal im Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne, und die Höhe der Frequenzkennlinie entspricht der Größe der Echoamplitude. Dieses Fourierspektrum stellt daher in diesem Fall das Echoprofil dar, das in gleicher Weise wie das beim Pulsradar erhaltene Echoprofil ausgewertet werden kann.

**Patentansprüche**

1. Verfahren zur Messung des Füllstands eines Füllguts (14) in einem Behälter (10) nach dem Radarprinzip, bei welchem mittels der oberhalb der höchsten vorkommenden Füllhöhe (F) angeordneten Antenne (22) eines Entfernungsmeßgeräts Mikrowellen nach unten abgestrahlt und reflektierte Mikrowellen empfangen werden, das die Amplitudenwerte der empfangenen Mikrowellen als Funktion der Laufzeit bzw. der der Laufzeit entsprechenden Distanz darstellende Echoprofil aufgezeichnet wird, zur Bestimmung des Echohöckers im Echoprofil, der von den an der Füllgutoberfläche (16) reflektierten Echowellen stammt, ein Maximum des Echoprofils ermittelt wird und der Abstand der Füllgutoberfläche (16) von der Antenne (22) aus dem spitzenwert dieses Echohöckers gewonnen wird, **dadurch gekennzeichnet, daß** beim Auftreten eines Doppelhöckers aus zwei sich überlappenden Echohöckern, von denen der erste Echohöcker von den an der Füllgutoberfläche (16) reflektierten Mikrowellen stammt, während der zweite Echohöcker von den an einer in geringem Abstand unter der Füllgutoberfläche (16) liegenden Grenzfläche reflektierten Mikrowellen stammt und einen größeren Spitzenwert als der erste Echohöcker hat, zur Bestimmung des Spitzenwerts des ersten Echohöckers die folgenden Verfahrensschritte angewendet werden:

    ausgehend von dem ermittelten Maximum des Echoprofils, das dem Spitzenwert des Doppelhöckers entspricht, werden die in Richtung zu kleineren Distanzwerten liegenden Meßpunkte des Echoprofils ausgewertet, um

    a) das dem Maximum des Echoprofils zunächst liegende erste Maximum ($m_1$) der Steigung des Echoprofils und den zugehörigen Distanzwert ($x_1$) zu bestimmen;
    b) das dem ersten Maximum ($m_1$) zunächst liegende Minimum ($m_2$) der Steigung des Echoprofils und den zugehörigen Distanzwert ($x_2$) zu bestimmen;
    c) das dem Minimum ($m_2$) zunächst liegende zweite Maximum ($m_3$) der Steigung des

Echoprofils und den zugehörigen Distanzwert ($x_3$) zu bestimmen;

wobei der Quotient ($Q = m_2/m_1$) aus dem Minimum ($m_2$) und dem ersten Maximum ($m_1$) der Steigung des Echoprofils gebildet und mit einem vorgegebenen Referenz wert verglichen wird, und

wobei die Bestimmung der Distanz mit dem ursprünglich ermittelten Maximum erfolgt, wenn der Quotient ($Q = m_2/m_1$) größer ist als der Referenzwert und

wobei der in der Mitte zwischen dem Distanzwert ($x_3$) des zweiten Maximums ($m_3$) und dem Distanzwert ($x_2$) des Minimums ($m_2$) der Steigung des Echoprofils liegende Distanzwert als Distanzwert ($x_M$) des Spitzenwertes des ersten Echohöckers und der zugehörige Amplitudenwert ($A_M$) als Spitzenwert des ersten Echohöckers zur Bestimmung des Abstands der Füllgutoberfläche (16) von der Antenne (22) verwendet wird, wenn der Quotient (Q) kleiner ist als der vorgegebene Referenzwert.

2. Verfahren nach Anspruch 1,
   **dadurch gekennzeichnet,**
   **dass** der Referenzwert empirisch ermittelt wird.

3. Verfahren nach Anspruch 1 oder 2, **dadurch gekennzeichnet, daß** der Abstand der Füllgutoberfläche (16) von der Antenne (22) aus der Distanz zwischen dem Distanzwert eines Punktes, der auf der ansteigenden Flanke eines Referenzhöckers um einen vorbestimmten Betrag unter dem Spitzenwert des Referenzhöckers liegt, und dem Distanzwert eines Punktes, der auf der ansteigenden Flanke des Doppelhöckers um den gleichen Betrag unter dem als Spitzenwert des ersten Echohöckers ermittelten Amplitudenwert liegt, gewonnen wird.

4. Verfahren nach Anspruch 3, **dadurch gekennzeichnet, daß** der vorbestimmte Betrag 3 dB ist.

5. Verfahren nach Anspruch 3 oder 4, **dadurch gekennzeichnet, daß** das Entfernungsmeßgerät nach dem Pulsradarprinzip arbeitet und daß der Referenzhöcker aus einem Anteil des der Antenne (22) zugeführten Sendeimpulses gebildet wird.

**Claims**

1. Radar-based method of measuring the level of a material (14) in a container (10) in which, by means of the antenna (22) of a ranging device arranged above the maximum filling height (F) occurring, microwaves are radiated downwards and reflected microwaves received, the echo profile representing the amplitude values of the received microwaves as a function of the transit time or the distance corresponding to the transit time is plotted, a maximum of the echo profile is established for determining the echo hump in the echo profile originating from the echo waves reflected by the material surface (16) and the distance of the material surface (16) from the antenna (22) is obtained from the peak value of this echo hump, **characterised in that** on occurrence of a double hump comprising two overlapping echo humps, of which the first echo hump originates from the microwaves reflected by the material surface (16), whilst the second echo hump originates from the microwaves reflected by an interface located a small distance below the material surface (16) and has a larger peak value than the first echo hump, the following method steps are employed for determining the peak value of the first echo hump: starting from the established maximum of the echo profile corresponding to the peak value of the double hump the measuring points of the echo profile located in the direction towards smaller distance values are evaluated to determine

   a) the first maximum ($m_1$) of the slope of the echo profile located nearest to the maximum of the echo profile and the corresponding distance value ($x_1$);
   b) the minimum ($m_2$) of the slope of the echo profile located nearest to first maximum ($m_1$) and the corresponding distance value ($x_2$);
   c) the second maximum ($m_3$) of the slope of the echo profile located nearest to the minimum ($m_2$) and the corresponding distance value ($x_3$);

   the quotient ($Q = m_2/m_1$) of the minimum ($m_2$) and the first maximum ($m_1$) of the slope of the echo profile being formed and compared with a preset reference value, and determining of the distance being done with the originally established maximum if the quotient ($Q = m_2/m_1$) is greater than the reference value, and

   the distance value located in the middle between the distance value ($x_3$) of the second maximum ($m_3$) and the distance value ($x_2$) of the minimum ($m_2$) of the slope of the echo profile being used as the distance value ($x_M$) of the peak value of the first echo hump and the corresponding amplitude value ($A_M$) being used as the peak value of the first echo hump to determine the distance of the material surface (16) from the antenna (22) if the quotient (Q) is less than the preset reference value.

2. Method according to Claim 1, **characterised in that** the reference value is empirically determined.

3. Method according to Claim 1 or 2, **characterised in that** the distance of the material surface (16) from the antenna (22) is obtained from the distance between the distance value of a point located on the leading edge of a reference hump below the peak value of the reference hump by a predetermined amount and the distance value of a point located on the leading edge of the double hump below the amplitude value established as the peak value of the first echo hump by the same amount.

**4.** Method according to Claim 3, **characterised in that** the predetermined amount is 3 dB.

**5.** Method according to Claim 3 or 4, **characterised in that** the ranging device works according to the pulsed radar principle and **in that** the reference hump is formed by a proportion of the transmitted pulse fed to the antenna (22).

**Revendications**

**1.** Procédé destiné à la mesure du niveau d'un produit (14) dans un réservoir (10) d'après le principe du radar, avec lequel des micro-ondes sont émises vers le bas et les micro-ondes réfléchies sont reçues au moyen de l'antenne (22) d'un télémètre disposé au-dessus du niveau (F) maximal possible, lequel dispositif enregistre les valeurs d'amplitude des micro-ondes reçues en tant que fonction du temps de propagation ou le profil d'écho représentant la distance correspondant au temps de propagation, en vue de la détermination de la bosse dans le profil d'écho, qui provient des ondes d'écho réfléchies à la surface du produit (16), un maximum du profil d'écho étant déterminé et la distance de la surface du produit (16) par rapport à l'antenne (22) étant obtenue à partir du sommet de cette bosse, **caractérisé en ce que**, en cas d'apparition d'une bosse double constituée de deux bosses d'écho se chevauchant, parmi lesquelles la première bosse d'écho provient des micro-ondes réfléchies à la surface du produit (16), tandis que la deuxième bosse d'écho provient des micro-ondes réfléchies à la surface de séparation située à faible distance sous la surface du produit (16) et possède un sommet supérieur à celui de la première bosse d'écho, les étapes de procédé suivantes sont utilisées en vue de la détermination du sommet de la première bosse d'écho :

En partant du maximum déterminé pour le profil d'écho, qui correspond au sommet de la bosse double, les points de mesure du profil d'écho se trouvant en direction des petites valeurs de distance sont exploités, afin de

a) déterminer le premier maximum ($m_1$) de la pente du profil d'écho se situant le plus près du maximum du profil d'écho et la distance correspondante ($x_1$) ;
b) déterminer le minimum ($m_2$) de la pente du profil d'écho se situant le plus près du premier maximum ($m_1$) et la distance correspondante ($x_2$) ;
c) déterminer le deuxième maximum ($m_3$) de la pente du profil d'écho se situant le plus près du minimum ($m_2$) et la distance correspondante ($x_3$) ;

le quotient ($Q = m_2 / m_1$) étant formé à partir du minimum ($m_2$) et du premier maximum ($m_1$) de la pente du profil d'écho et comparé avec une valeur de référence prédéfinie, et la détermination de la distance étant réalisée avec le maximum déterminé à l'origine, lorsque le quotient ($Q = m_2 / m_1$) est supérieur à la valeur de référence et la distance se trouvant au centre, entre la distance ($x_3$) du deuxième maximum ($m_3$) et la distance ($x_2$) du minimum ($m_2$) de la pente du profil d'écho, étant utilisée en tant que distance ($x_M$) du sommet de la première bosse d'écho en vue de la détermination de la distance de la surface de produit (16) par rapport à l'antenne (22) lorsque le quotient ($Q$) est inférieur à la valeur de référence prédéfinie.

**2.** Procédé selon la revendication 1, **caractérisé en ce que** la valeur de référence est déterminée de façon empirique.

**3.** Procédé selon la revendication 1 ou 2, **caractérisé en ce que** la distance entre la surface de produit (16) et l'antenne (22) est déterminée à partir de la distance entre un point se trouvant sur le front montant d'une bosse de référence, point dont la valeur de distance est inférieure d'un montant prédéfini au sommet de la bosse de référence, et un point se trouvant sur le front montant de la bosse double, point dont la valeur de distance est inférieure du même montant prédéfini au sommet de la valeur d'amplitude déterminée pour la première bosse d'écho.

**4.** Procédé selon la revendication 3, **caractérisé en ce que** le montant prédéfini est égal à 3 dB.

**5.** Procédé selon la revendication 3 ou 4, **caractérisé en ce que** le télémètre fonctionne d'après le principe du radar pulsé et que la bosse de référence est formée par une partie de l'impulsion d'émission acheminée à l'antenne (22).

Fig. 1

## Fig. 2

## Fig. 3

Fig. 4

Fig. 5